# EUROPÄISCHE PATENTSCHRIFT

(11) **EP 2 821 551 B1**
(45) Veröffentlichungstag und Bekanntmachung des Hinweises auf die Patenterteilung: **10.02.2016**
(21) Anmeldenummer: 13175298.2
(22) Anmeldetag: 05.07.2013
(51) Int. Cl.: E01C 19/48

(54) **Baumaschine mit beheizbaren Lagerstrukturen**
Construction machine with heatable bearing structures
Machine de construction dotée de structures de palier pouvant être chauffées

(43) Veröffentlichungstag der Anmeldung: 07.01.2015
(73) Patentinhaber: Joseph Vögele AG, 67067 Ludwigshafen (DE)
(72) Erfinder: Erdtmann, Bernhard, 68259 Mannheim (DE); Mueller, Wolfgang, 64385 Reichelsheim (DE); Felchner, Andre, 31167 Bockenem (DE)
(74) Vertreter: Grünecker Patent- und Rechtsanwälte PartG mbB

(56) Entgegenhaltungen:
- DE-A1- 2 219 569
- DE-A1- 2 248 412
- US-A- 3 967 913

## Beschreibung

Die Erfindung bezieht sich auf eine Baumaschine gemäß dem Oberbegriff des Anspruchs 1.

Solche Baumaschinen zur Verarbeitung und/oder zum Transport von Mischgut mit temperaturabhängiger Viskosität, bspw. Asphalt, sind aus der Praxis in Form von Straßenfertigern oder aber Beschickern bekannt. Sie werden zum Legen von Schichten im Straßenbau oder beim Bau von anderen befestigten Wegen eingesetzt. Sie verarbeiten noch heißes Material, das auf der dafür vorgesehenen Oberfläche verteilt und verdichtet wird. Die Temperatur des eingebauten Materials und eine homogene Temperaturverteilung innerhalb des verbauten Materials spielen dabei eine entscheidende Rolle für die Qualität des Einbauergebnisses. Aus dem folgenden Stand der Technik sind verschiedene Mittel und Wege bekannt, die Temperatur des Materials an verschiedenen Stellen der Baumaschine auf einem gewünschten Niveau zu halten, bzw. die Temperaturverteilung homogen zu halten.

Aus der DE 2 140 058 A und der DE 7 127 605 U, beide von der Anmelderin, ist ein Abstreifblech bekannt, das zur Führung des Materials im Bereich einer Querverteilschnecke vorgesehen ist. Dieses Blech ist beheizbar ausgeführt.

In der DE 2 312 188 A ist ein Gussasphaltdeckenfertiger offenbart, der über beheizte Förderschnecken verfügt, die das Material von einer vorderen zu einer hinteren Seite des Deckenfertigers transportieren. Diese Förderschnecken sind von beheizten Wannen umgeben.

Weitere beheizbare Materialfördersysteme in Straßenfertigern bzw. Materialfördersysteme mit Heizeinrichtungen sind aus der DE 20 2010 005 125 U1 der Anmelderin und der DE 198 09 435 A1 bekannt. Die DE 2 219 569 A zeigt einen Straßenfertiger, der Förderschnecken aufweist, die in beheizbaren Rohren angeordnet sind.

Aufgabe der Erfindung ist es, Baumaschinen der oben genannten Art dahingehend zu verbessern, dass eine homogenere Temperaturverteilung innerhalb des verbauten Materials erreicht wird.

Diese Aufgabe wird gelöst durch eine Baumaschine mit den Merkmalen des Anspruchs 1. Vorteilhafte Weiterbildungen sind in den Unteransprüchen gegeben.

Bei der erfindungsgemäßen Baumaschine zur Verarbeitung und/oder zum Transport von Material mit temperaturabhängiger Viskosität handelt es sich um einen Straßenfertiger oder einen Beschicker. Dieser umfasst einen Maschinenrahmen, an dem ein Gutbunker, ein Fahrerstand, ein Primärantrieb sowie ein Fahrwerk mit Vortriebselementen vorgesehen sind. Des Weiteren umfasst die erfindungsgemäße Baumaschine ein Fördersystem, das zur Förderung des Materials konfiguriert ist, wobei das Fördersystem mindestens eine Förderschnecke umfasst und die mindestens eine Förderschnecke durch mindestens eine Lagerstruktur gelagert ist. Die erfindungsgemäße Baumaschine zeichnet sich dadurch aus, dass die Lagerstruktur selbst durch mindestens ein Heizelement beheizbar ist. Die Lagerstruktur ist dazu konfiguriert, die Förderschnecke drehbar an dem Maschinenrahmen zu lagern. Sie ist bevorzugt dazu konfiguriert, die Förderschnecke an ihrer Mittel- oder Drehachse drehbar zu lagern. Dies kann mit Hilfe von geeigneten Lagerabschnitten realisiert werden, die an der Förderschnecke vorgesehen sind, bspw. an einer Kernwelle der Förderschnecke. Besonders bevorzugt ist die Verwendung von Drehlagern, z. B. Wälz- oder Gleitlager bzw. -buchsen. Diese können die Reibung und damit den Verschleiß reduzieren. Bei der Lagerstruktur kann es sich bspw. um einen Lagerbock handeln, an dem die Förderschnecke im Bereich ihrer Drehachse drehbar gelagert ist.

Die Erfindung bietet den Vorteil, dass das Temperaturniveau und die Homogenität der Temperaturverteilung auch in solchen Fällen nicht negativ beeinflusst wird, in denen das Einbaumaterial mit der Lagerstruktur in Berührung kommt. Eine solche Möglichkeit zum Beheizen der Lagerstruktur bietet darüber hinaus den Vorteil, das bei der Reinigung der Baumaschine ggf. anhaftendes, erkaltetes Material erwärmt und so leichter entfernt werden kann. Des Weiteren ermöglicht die erfindungsgemäße Konfiguration eine Art des Vorheizens der Lagerstruktur, bevor die Förderschnecken in Betrieb genommen werden. Dadurch wird ggf. vorhandenes erkaltetes Material, das der Rotation der Förderschnecken durch Verkleben mit der Lagerstruktur entgegenwirkt, aufgeweicht und das Losbrechmoment der Förderschnecken so verringert. Durch die verringerte Reibung, augrund von weniger erkalteten und damit harten Materialresten, wird auch der Verschleiß reduziert.

In einer erfindungsgemäßen ersten Variante ist das Heizelement in einem innerhalb der Lagerstruktur vorhandenen Hohlraum angeordnet. Diese Anordnung hat den Vorteil, dass das Heizelement durch die Lagerstruktur vor Beschädigungen, Staub, Nässe oder anderen negativen Einflussfaktoren geschützt ist. Dabei ist es möglich, dass der Hohlraum innerhalb der Lagerstruktur ohnehin vorhanden ist, bspw. weil die Lagerstruktur aus einem rohrförmigen oder einem anderen hohlen Halbzeug gefertigt ist. Ebenso ist jedoch auch vorstellbar, dass der Hohlraum speziell für die Aufnahme des Heizelements vorgesehen ist.

In einer erfindungsgemäßen zweiten Variante ist das Heizelement an einer Außenseite der Lagerstruktur vorgesehen. Dies hat den Vorteil, dass ein ggf. defektes Heizelement einfacher ausgetauscht werden kann. Generell können Wartungs- und Reparaturarbeiten an einem außerhalb der Lagerstruktur angebrachten Heizelement einfacher durchgeführt werden. Zu diesem Zweck kann es vorteilhaft sein, wenn das Heizelement durch eine lösbare Verbindung an der Außenseite der Lagerstruktur befestigt ist. Dabei kann es sich bspw. um eine Schraubverbindung, eine formschlüssige oder aber eine Steckverbindung handeln. Es ist jedoch ebenso möglich, eine nicht-lösbare Verbindung vorzusehen, z. B. eine stoffschlüssige Verbindung, eine Schweiß- oder aber eine Klebeverbindung.

Es ist denkbar, dass das Heizelement in die Lagerstruktur integriert ist. Es kann dabei z. B. integral mit der Lagerstruktur ausgeführt sein. Bspw. ist es denkbar, dass das Heizelement in der Lagerstruktur vergossen ist. Das Heizelement kann dabei entweder nach Außen hin freiliegen, oder auch durch die Lagerstruktur abgedeckt sein.

Besonders günstig ist es, wenn ein Schutzelement zum Schutz des Heizelements vorgesehen ist. Dieses kann bspw. an der Lagerstruktur befestigt sein, vorzugsweise abnehmbar. Auf diese Weise kann auch ein zur Außenseite der Lagerstruktur freiliegendes, bzw. an dieser Außenseite angebrachtes Heizelement zumindest vor mechanischen Einflüssen wie Stößen oder Schlägen, oder vor einem Verkleben mit dem Einbaumaterial geschützt werden. Eine abnehmbare Variante des Schutzelements ermöglicht weiterhin einfach durchzuführende Wartungs-, Reparatur- und Austauscharbeiten. Das Schutzelement kann dabei direkt mit einer lösbaren Verbindung befestigt sein. Denkbar ist es jedoch ebenfalls, ein Montageelement, an dem das Schutzelement lösbar befestigt ist, permanent zu befestigen. Das Schutzelement kann dabei an der Lagerstruktur selbst befestigt sein, aber ebenso gut an einer beliebigen anderen geeigneten Struktur der Baumaschine, z. B. dem Maschinenrahmen.

Bei der Lagerstruktur kann es sich z. B. um einen Mittellagerbock und/oder einen Außenlagerbock der Förderschnecke handeln. Die Förderschnecke kann dabei bspw. eine Querförderschnecke sein, die das Einbaumaterial vor einer Bohle eines Straßenfertigers quer zur Fahrtrichtung verteilt. Der Mittellagerbock ist dabei in der Mitte des Straßenfertigers vorgesehen. Der Außenlagerbock kann an der linken oder aber an der rechten Außenseite am Ende der Förderschnecke angeordnet sein. Sowohl der Mittel- als auch der Außenlagerbock sind dabei dazu konfiguriert, die Förderschnecke drehbar an dem Maschinenrahmen zu lagern.

Es ist vorstellbar, dass mehrere Lagerstrukturen mit jeweils mindestens einem Heizelement vorgesehen sind, wobei mindestens ein Heizelement innerhalb der Lagerstruktur, an der es vorgesehen ist, angeordnet ist und/oder mindestens ein Heizelement an einer Außenseite der Lagerstruktur, an der es vorgesehen ist, angeordnet ist. Auf diese Weise sind sämtliche Kombinationen von innerhalb der jeweiligen Lagerstruktur und an einer Außenseite der jeweiligen Lagerstruktur vorgesehenen Heizelementen denkbar. Bei einem Beispiel einer mittleren Lagerstruktur und zwei äußeren Lagerstrukturen können bspw. die Heizelemente an den äußeren Lagerstrukturen an der Außenseite der jeweiligen äußeren Lagerstrukturen vorgesehen sein, und die Heizelemente an der mittleren Lagerstruktur können innerhalb derselben vorgesehen sein. Genau so gut sind jedoch beliebige andere geeignete Kombinationen denkbar.

In einer Variante können sämtliche Heizelemente innerhalb der jeweiligen Lagerstrukturen angeordnet sein oder aber sämtliche Heizelemente an einer Außenseite der jeweiligen Lagerstrukturen angeordnet sein.

Besonders günstig ist es, wenn die Heizleistung des Heizelements variabel einstellbar ist. Auf diese Weise kann die Heizleistung an unterschiedliche Einbaumaterialien, die unterschiedliche Verarbeitungstemperaturen aufweisen, angepasst werden. Ebenso ist eine Anpassung an schwankende Umgebungstemperaturen möglich. Denkbar ist zudem, dass unterschiedliche Verarbeitungsgeschwindigkeiten unterschiedliche Temperaturen erforderlich machen.

In einer weiteren vorteilhaften Variante kann die Heizleistung des Heizelements automatisiert regelbar sein. Dadurch wird der Bedienkomfort der erfindungsgemäßen Baumaschine wesentlich erhöht.

Als Basis für die Regelung der Heizleistung des Heizelements sind mehrere Eingangsgrößen denkbar. Eine vorteilhafte Variante sieht einen Temperatursollwert als Basis für die Regelung vor. Es kann jedoch ebenso eine vorgegebene Wärmmenge verwendet werden. Unabhängig davon, welche Sollwerte für die Regelung verwendet werden, können diese von anderen Einflussfaktoren abhängig sein, so z. B. von der Umgebungstemperatur, der Mischguttemperatur, der Wärmeleitfähigkeit der verwendeten Werkstoffe für die Lagerung, der Einbaugeschwindigkeit oder aber der Arbeitsbreite einer Bohle, wenn die erfindungsgemäße Baumaschine ein Straßenfertiger ist.

Es ist vorteilhaft, wenn das Heizelement unabhängig von übrigen Aggregaten der Baumaschine betreibbar ist. Es ist dabei denkbar, dass das Heizelement unabhängig von sämtlichen Aggregaten der Baumaschine betreibbar ist; diese Aggregate können bspw. ein Primärantrieb der Baumaschine, das Fördersystem der Baumaschine, ein Kühlsystem sowie weitere beliebige Komponenten der Baumaschine sein. Ebenso kann das Heizelement unabhängig von ausgewählten Aggregaten der Baumaschine bspw. nur unabhängig von dem Fördersystem, aber abhängig von dem Primärantrieb der Baumaschine betreibbar sein. Dadurch können verschiedene Funktionen, wie bspw. die weiter oben erwähnten Reinigungs- oder aber Vorheizfunktionen einfacher realisiert werden.

Vorstellbar ist es, dass die Heizelemente in einer Art Matrixmaterial vergossen sind. Dabei können Metalle, Keramiken, Glas, Kohlefaser oder aber Kunststoffe verwendet werden. Ebenso sind geeignete Kombinationen oder Verbundwerkstoffe aus diesen Materialien möglich.

Es ist denkbar, dass das Heizelement mit elektrischer Energie betreibbar ist. Solche elektrischen Heizelemente sind bspw. bei Straßenfertigern an anderen Einbauorten bereits verbreitet. Ihre Heizleistung lässt sich einfach einstellen und ihr Anschluss kann durch einfache Kabel erfolgen.

Bei elektrischen Heizelementen sind unterschiedliche Wirkmechanismen vorstellbar. So ist es bspw. möglich, dass das Heizelement ein Widerstandsheizelement, ein induktives Heizelement oder aber einen Infrarotstrahler umfasst. Die verschiedenen Arten von elektrischen Heizelementen weisen unterschiedliche Vorteile auf, so ist z. B. ein Widerstandsheizelement besonders einfach zu realisieren, während ein Infrarotstrahler die Möglichkeit einer gerichteten Wärmeübertragung bietet.

In einer weiteren Variante sind jedoch auch andere Heizelemente denkbar, so z. B. Heizelemente, die durch Verbrennung eines Brennstoffs betrieben werden.

Dabei kommt eine Vielzahl von Brennstoffen in Betracht, so z. B. verschiedene Brenngase wie Methan, Acetylen, Propan, Butan oder aber Wasserstoff. Vorstellbar sind ebenfalls flüssige Brennstoffe, wie z. B. Benzin oder Diesel. Bei dem Brennstoff kann es sich sowohl um einen speziell zum Zweck des Betriebs des mindestens einen Heizelements mitgeführten Brennstoff handeln, als auch um den gleichen Brennstoff, der zum Betrieb des Primärantriebs verwendet wird. D.h., dass der Brennstoff sowohl zum Betrieb des Heizelements als auch zum Betrieb des Primärantriebs verwendbar sein kann.

In einer weiteren Variante können die Heizelemente Heißluftgebläse, die bspw. mit aufgeheizter Kühlluft des Primärantriebs 5 oder Abgasen desselben betrieben werden können, umfassen.

Besonders günstig ist es, wenn das Heizelement einen Reinigungsmodus aufweist, in dem das Heizelement dazu betrieben wird, erhärtetes Material im Bereich der Lagerstruktur aufzuweichen und so eine leichtere Reinigung zu ermöglichen. Ein solcher Reinigungsmodus kann z. B. darin bestehen, dass das Heizelement für einen bestimmten Zeitraum die höchstmögliche Heizleistung liefert.

Es kann vorteilhaft sein, wenn das Heizelement von einer an der Baumaschine vorgesehenen Bedienvorrichtung aus einstellbar ist. Dabei kann es sich z. B. um ein zentrales Bedienpult im Bereich des Fahrerstands handeln. Ebenso sind jedoch bspw. sogenannte Außensteuerstände denkbar, die bspw. an den äußeren Enden einer Einbaubohle eines Straßenfertigers befestigt sind. Dabei ist es denkbar, dass die Heizleistung des Heizelements direkt variabel eingestellt werden kann. In einer anderen Variante kann der Temperatursollwert für eine automatisierte Regelung durch einen Bediener mit Hilfe der Bedienvorrichtung vorgegeben werden.

Im Folgenden wird ein vorteilhaftes Ausführungsbeispiel der Erfindung anhand von Zeichnungen näher erläutert.
- Figur 1: zeigt eine Baumaschine, in diesem Beispiel einen Straßenfertiger, in einer perspektivischen Rückansicht. Zur besseren Sichtbarkeit ist keine montierte Bohle dargestellt.
- Figur 2: zeigt eine vergrößerte perspektivische Darstellung eines Fördersystems der Baumaschine aus Figur 1 in einer perspektivischen Rückansicht, d.h. mit Blick auf die Rückseite der Baumaschine.
- Figur 3: zeigt das Fördersystem aus Figur 2 in einer perspektivischen Ansicht von der gegenüberliegenden Seite, d.h. mit Blickrichtung entgegen der Fahrtrichtung der Baumaschine.
- Figur 4: zeigt die gleiche Ansicht eines Materialfördersystems wie Figur 3. Die gezeigten Heizelemente sind jedoch in Übereinstimmung mit einem weiteren Ausführungsbeispiel gezeigt.
- Figur 5: zeigt die gleiche Ansicht eines Fördersystems wie Figur 2. Das gezeigte Heizelement ist jedoch in Übereinstimmung mit einem dritten Ausführungsbeispiel gezeigt.
- Figur 6: zeigt eine Baumaschine, in diesem weiteren Beispiel einen Beschicker, in einer Seitenansicht. Komponenten, die in dieser Ansicht hinter anderen Teilen verborgen sind, sind mit gestrichelten Linien angedeutet.
- Figur 7: zeigt den Beschicker aus Figur 6 in einer Draufsicht von oben. Zur besseren Übersichtlichkeit sind der Fahrerstand, das Fahrwerk sowie der Maschinenrahmen in dieser Ansicht nicht dargestellt. Die Heizelemente sind in Übereinstimmung mit einem weiteren Ausführungsbeispiel der Erfindung dargestellt.
- Figur 8: zeigt die gleiche Ansicht wie Figur 7, jedoch mit Heizelementen nach einem weiteren Ausführungsbeispiel der Erfindung. Zur besseren Übersichtlichkeit sind nur solche Komponenten mit Bezugszeichen versehen, die sich gegenüber der Figur 7 unterscheiden.

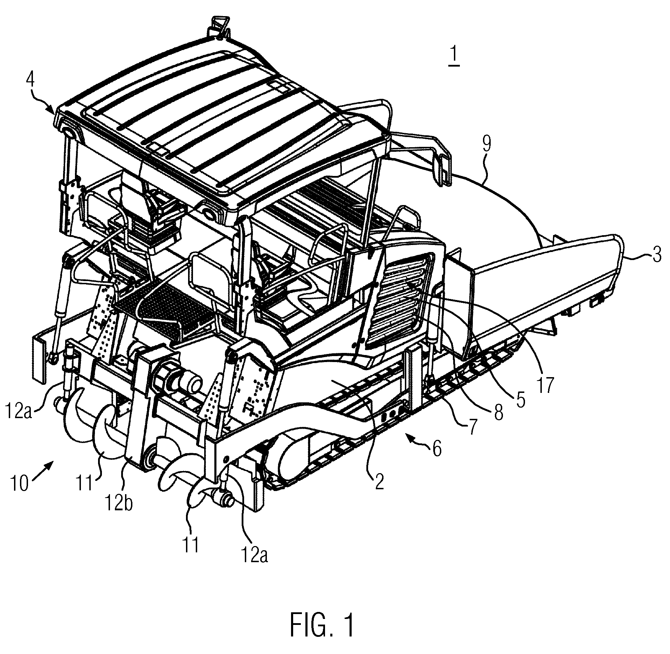

Figur 1 zeigt eine Baumaschine 1, in diesem Fall einen Straßenfertiger, die einen Maschinenrahmen 2 umfasst. An dem Maschinenrahmen 2 sind ein Gutbunker 3, ein Fahrerstand 4, ein Primärantrieb 5 sowie ein Fahrwerk 6 mit Vortriebselementen 7 vorgesehen. Der Primärantrieb 5 ist dabei zumindest zum Antrieb des Fahrwerks 6 vorgesehen. Ebenso kann er eine geeignete Energieform für weitere Aggregate der Baumaschine 1 zur Verfügung stellen, so z. B. Hydraulikdruck für hydraulisch betriebene Systeme oder aber elektrische Spannung für elektrisch betriebene Systeme. Der Primärantrieb 5 ist in einem Maschinengehäuse hinter Lüftungsschlitzen 8 untergebracht, die dazu konfiguriert sind, eine Frischluftzufuhr für ein Kühlsystem 17 (ebenfalls in einem Maschinenraum hinter den Lüftungsschlitzen 8 angeordnet) zu ermöglichen.

Der Gutbunker 3 dient zur Aufnahme eines Vorrats an Material 9, aus dem der spätere Straßenbelag hergestellt wird. Dazu wird das Material 9 durch ein Längsfördersystem (nicht gezeigt) unter dem Fahrerstand 4 hindurch zur Rückseite der Baumaschine 1 gefördert, wo es von einem Fördersystem 10 quer zur Fahrtrichtung der Baumaschine 1 verteilt wird. Im gezeigten Ausführungsbeispiel verfügt das Fördersystem 10 über zwei Förderschnecken 11. Diese sind mit Hilfe von Lagerstrukturen 12 und ggf. weiteren strukturellen Elementen 13 drehbar an dem Maschinenrahmen 2 gelagert. Im dargestellten Ausführungsbeispiel werden als Lagerstrukturen zwei Außenlagerblöcke 12a sowie ein Mittellagerbock 12b verwendet. Gemäß der Erfindung können jedoch je nach Konfiguration des Fördersystems 10 verschiedene Anzahlen und Arten von Lagerstrukturen 12 verwendet werden.

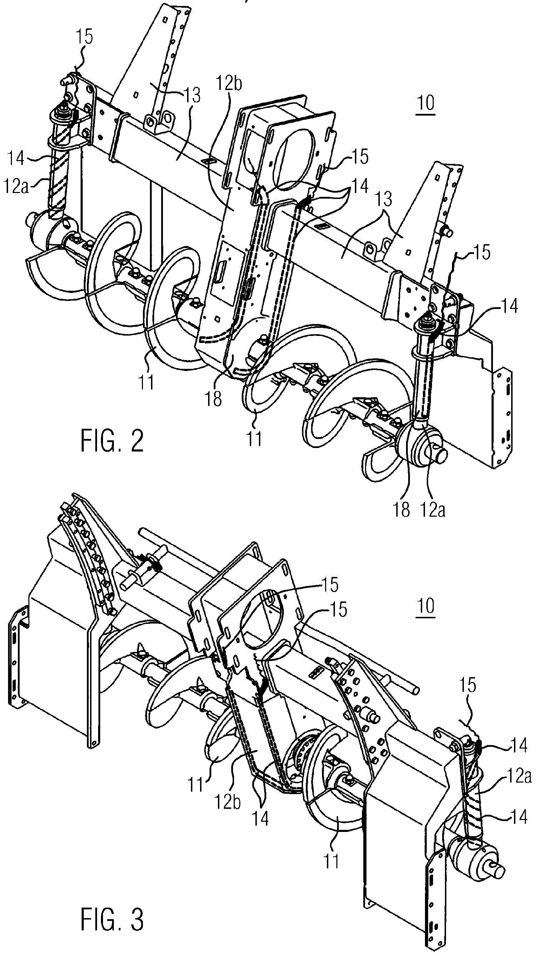

In Figur 2 ist das Fördersystem 10 vergrößert dargestellt. Zu erkennen sind die Lagerstrukturen 12, die über die strukturellen Elemente 13 mit dem Maschinenrahmen 2 verbunden sind. Im gezeigten Ausführungsbeispiel sind vier Heizelemente 14 vorgesehen, davon jeweils eines in den Außenlagerböcken 12a und zwei in dem Mitteillagerbock 12b. Die Heizelemente 14 sind in diesem Ausführungsbeispiel innerhalb der Lagerstrukturen 12 vorgesehen. Dadurch sind sie vor äußeren Einflüssen wie Schmutz, Feuchtigkeit, Schlägen und Stößen sowie zu hohen oder zu niedrigen Temperaturen, geschützt. Die schematische Darstellungsform mit gestrichelten Linien soll verdeutlichen, dass die Heizelemente 14 innerhalb der Lagerstrukturen 12 vorgesehen sind. Dies kann auf verschiedene Weise realisiert werden. Die Heizelemente 14 können dabei sowohl in den Wandungselementen der Lagerstrukturen 12 integriert sein als auch in einem Hohlraum 18 innerhalb der Lagerstrukturen 12 vorgesehen sein.

Wie gezeigt sind verschiedene Anordnungsformen denkbar. So ist in dem in Figur 2 rechten Außenlagerbock 12a das Heizelement 14 linear angeordnet. In dem in Figur 2 links dargestellten Außenlagerbock 12a ist das Heizelement 14 spiralförmig angeordnet. Im Mittellagerbock 12b sind die Heizelemente 14 zunächst linear und an einem Ende bogenförmig angeordnet, sodass die Form dem lateinischen Buchstaben J ähnelt. Es sind jedoch auch beliebige andere geeignete Formen möglich. Die Heizelemente 14 sind im Ausführungsbeispiel mit elektrischer Energie betreibbar und mit angedeuteten Anschlussleitungen 15 dargestellt. Eben so gut können jedoch auch andere Arten von Heizelementen vorgesehen sein wie z. B. die bereits genannten Gas- oder Flüssigkeitsbrenner oder aber auch Heißluftgebläse, die bspw. mit aufgeheizter Kühlluft des Primärantriebs 5 oder Abgasen desselben betrieben werden können. Diese Variationsmöglichkeiten gelten auch für die im Folgenden beschriebenen Ausführungsbeispiele, in denen die Anordnung der Heizelemente 14 verändert wird.

Figur 3 zeigt jedoch zunächst noch eine Ansicht des Fördersystems 10 aus der Gegenrichtung von Figur 2. Die Konfiguration des Fördersystems 10 mit den Förderschnecken 11, den Lagerstrukturen 12 und den darin vorgesehenen Heizelementen 14 ist dort nicht verändert.

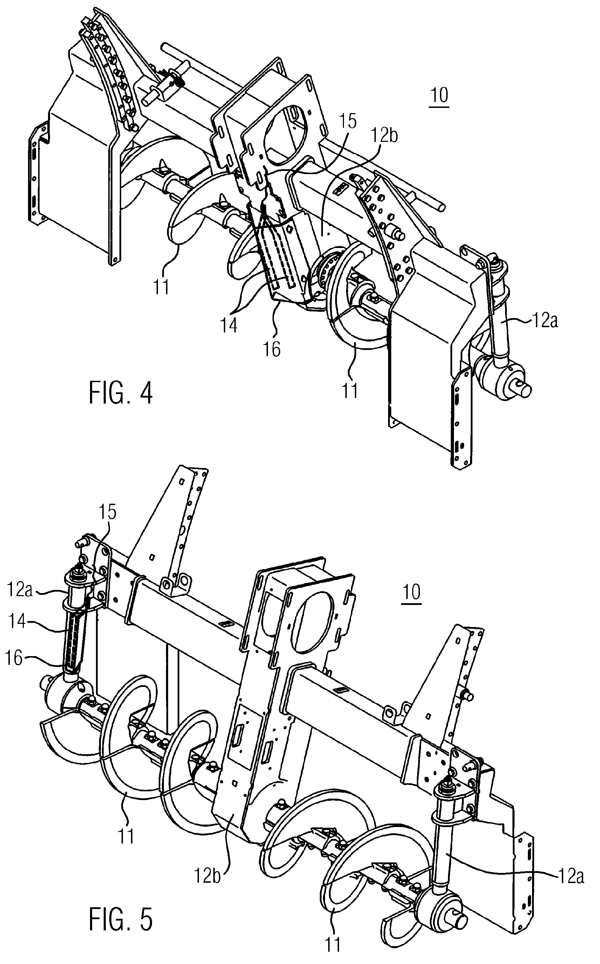

In Figur 4 ist ein zweites Ausführungsbeispiel der Anordnung der Heizelemente 14 an dem Mittellagerbock 12b dargestellt. Die Heizelemente 14 sind hier an der Außenseite des Mittellagerbocks 12b angeordnet. Die Anordnung an der Außenseite kann bedeuten, dass die Heizelemente 14 in die Wandung des Mittellagerbocks 12b integriert sind, jedoch nach außen hin freiliegen. Es kann jedoch genauso gut bedeuten, dass die Heizelemente 14 auf einer äußeren Oberfläche des Mittellagerbocks 12b vorgesehen sind, bspw. mit einer lösbaren oder aber einer unlösbaren Verbindung. In dem in Figur 4 gezeigten Ausführungsbeispiel ist ein Schutzelement 16 vorgesehen. Dies hat den Vorteil, dass die nach außen hin freiliegenden, bzw. auf der Außenseite des Mittellagerbocks 12b vorgesehenen Heizelemente 14 zumindest vor mechanischen Einflüssen wie Stößen oder Schlägen geschützt sind. Auch einem Verkleben durch das Einbaumaterial 9 wird durch dieses Schutzelement 16 vorgebeugt. Je nach Ausführung des Schutzelements 16 können die Heizelemente 14 auch vor Feuchtigkeit und Staub geschützt werden, z. B. mit Hilfe von Dichtungen. Im in Figur 4 gezeigten Ausführungsbeispiel ist das Schutzelement 16 durch lösbare Schraubverbindungen an dem Mittellagerbock 12b selbst befestigt. Es ist jedoch ebenso möglich, eine unlösbare Verbindung einzusetzen, z. B. eine Schweiß- oder Klebeverbindung. Ebenso ist es möglich, das Schutzelement 16 durch lösbare oder unlösbare Verbindungen an anderen geeigneten Strukturen des Straßenfertigers zu befestigen.

Figur 5 zeigt ein dem Ausführungsbeispiel in Figur 4 ähnliches Ausführungsbeispiel. Die Blickrichtung ist der aus Figur 4 entgegengesetzt. Hier ist das Heizelement 14 an einer Außenseite von einem der Außenlagerböcke 12a angebracht. Wie die Heizelemente an der Außenseite des Mittellagerbocks 12b in Figur 4, können die Heizelemente 14 auch hier sowohl in der Außenwand des Außenlagerbocks 12a integriert sein als auch alternativ durch eine lösbare oder unlösbare Verbindung an der Außenwand des Außenlagerbocks 12a befestigt sein. Das Heizelement 14 ist auch in dem in Figur 5 dargestellten Ausführungsbeispiel durch ein Schutzelement 16 geschützt. Die Funktionalität und die Variationsmöglichkeiten entsprechen denen des im in Figur 4 gezeigten Ausführungsbeispiel gezeigten Schutzelements 16.

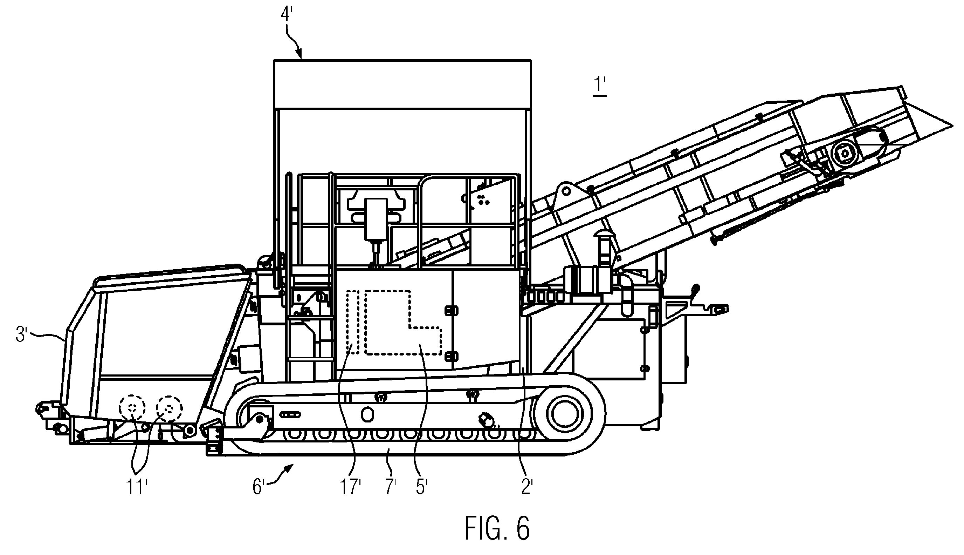

Figur 6 zeigt eine weitere erfindungsgemäße Baumaschine, in diesem Fall einen Beschicker 1', in einer Seitenansicht. Der Beschicker 1' umfasst einen Maschinenrahmen 2' an dem ein Gutbunker 3', ein Fahrerstand 4', ein Primärantrieb 5' sowie ein Fahrwerk 6' mit Vortriebselementen 7' vorgesehen sind. Der Primärantrieb 5' ist dabei zumindest zum Antrieb des Fahrwerks 6' vorgesehen. Ebenso kann er, wie beim erstgenannten Ausführungsbeispiel auch, eine geeignete Energieform für weitere Aggregate des Beschickers 1' zur Verfügung stellen, so z. B. Hydraulikdruck für hydraulisch betriebene Systeme oder aber elektrische Spannung für elektrisch betriebene Systeme.

Der Gutbunker 3' dient zur Aufnahme eines Vorrats an Material 9', aus dem der spätere Straßenbelag hergestellt wird. Dazu wird das Material 9' durch ein Längsfördersystem 19 an dem Fahrerstand 4' vorbei in einen Gutbunker 3 eines folgenden Straßenfertigers, bspw. des Straßenfertigers 1 gemäß dem erstgenannten Ausführungsbeispiel, gefördert. In dem Gutbunker 3' sind vier Förderschnecken 11' angeordnet. In diesem Ausführungsbeispiel dienen sie zur Förderung des Materials 9' aus Randbereichen des Bunkers 3' in Richtung des Längsfördersystems 9.

Die Förderschnecken 11' müssen nicht im Bunker 3' vorgesehen sein. Vielmehr sind Förderschnecken 11' an beliebigen Positionen des Beschickers 1' denkbar, bspw. als Teil des Längsfördersystems 19 oder aber als speziell zur besseren Durchmischung des Materials 9' vorgesehene Förderschnecken 11', die z. B. zwischen Gutbunker 3' und Längsfördersystem 19 angeordnet sind. Ebenso ist ein Gutbunker 3' ohne jegliche Förderschnecke 11' vorstellbar.

Die Förderschnecken 11' sind mit Hilfe von Lagerstrukturen 12' drehbar an dem Beschicker 1' gelagert. Im gezeigten Ausführungsbeispiel sind die Lagerstrukturen 12' mit jeweiligen Wänden des Bunkers 3' verbunden. Sie können jedoch auch direkt an dem Maschinenrahmen 2' oder an anderen strukturellen Elementen des Beschickers 1' befestigt sein.

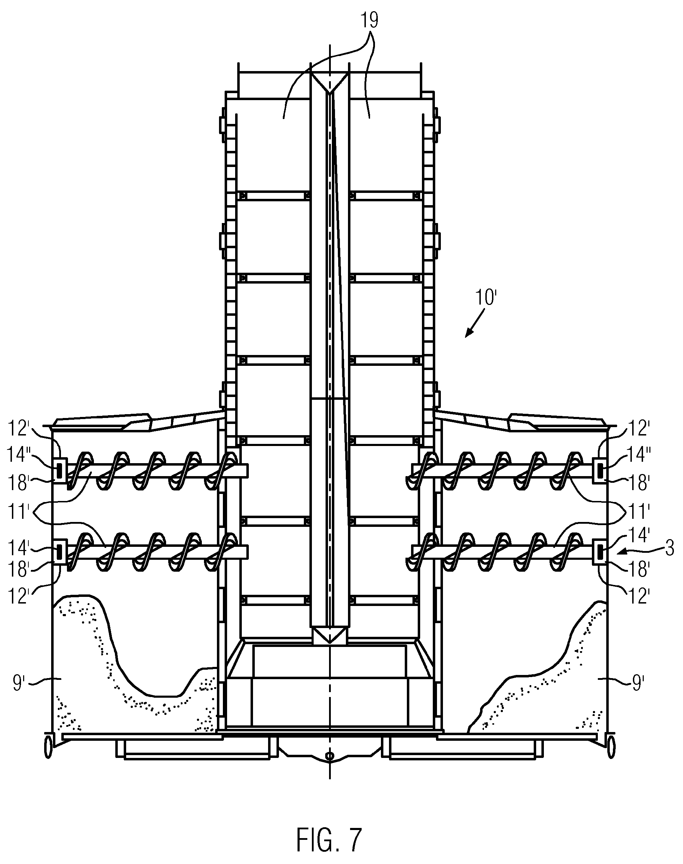

Figur 7 zeigt ein Fördersystem 10' des Beschickers 1' mit den Förderschnecken 11'. Im in Figur 7 gezeigten Ausführungsbeispiel sind Heizelemente 14', 14" innerhalb eines Hohlraums 18' der Lagerstrukturen 12' angeordnet. Die Heizelemente sind in diesem Ausführungsbeispiel beispielhaft als mit Brennstoff betriebene Heizelemente 14' und/oder als Heißluftgebläse 14" ausgeführt und schematisch dargestellt. Diese Betriebsarten der Heizelemente sind jedoch auch in Kombination mit den vorher beschriebenen Ausführungsbeispielen vorstellbar, in denen die Baumaschine 1 ein Straßenfertiger ist. Sowohl die Lagerstrukturen 12' als auch die Heizelemente 14', 14" sind lediglich schematisch gezeigt. Sie können sowohl im Innenraum der Lagerstruktur 12' montiert sein als auch alternativ dazu in die Lagerstruktur 12' integriert sein. D.h., dass sie integral in einem Stück mit der Lagerstruktur 12' ausgeführt sein können.

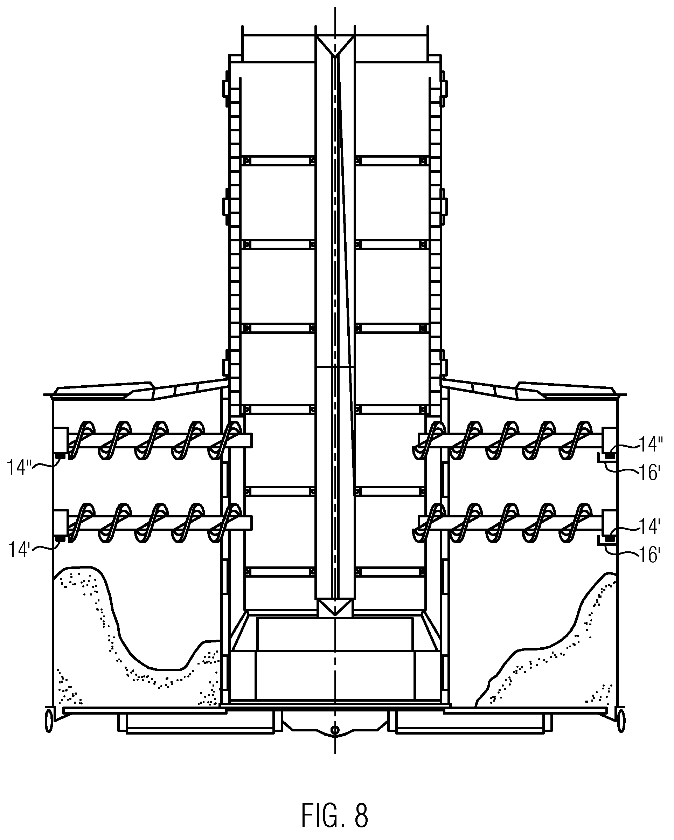

Figur 8 zeigt die Ansicht aus Figur 7 nach einem weiteren Ausführungsbeispiel der Erfindung. In Figur 8 sind lediglich solche Teile mit Bezugszeichen versehen, deren Konfiguration sich im Gegensatz zum in Figur 7 gezeigten Ausführungsbeispiel verändert hat. Dies sind insbesondere die Heizelemente 14', 14", die nun an einer Außenseite der Lagerstrukturen 12' vorgesehen sind. Auf der rechten Seite von Figur 8 sind die Heizelemente 14', 14" zusätzlich mit Schutzelementen 16' geschützt. Die Schutzelemente 16' sind in diesem Fall an der Wand des Bunkers 3' befestigt. Sie können jedoch auch an beliebigen geeigneten Teilen des Beschickers 1' befestigt werden.

Für die Ausführungsbeispiele, die den Beschicker 1' zeigen, gelten entsprechend die Variationsmöglichkeiten, die in den Ausführungsbeispielen, die einen Straßenfertiger 1 zeigen, beschrieben wurden. Auch die Betriebsarten und Energiequellen, die im Zusammenhang mit dem Ausführungsbeispiel des Straßenfertigers 1 genannt wurden, sind auf die Heizelemente 14', 14" des Beschickers 1' anwendbar.

Die gezeigten Ausführungsbeispiele können lediglich eine Auswahl der möglichen Kombinationen darstellen. Es ist möglich, eine beliebige Anzahl von Heizelementen 14, 14', 14" an einer beliebigen Anzahl von Lagerstrukturen 12, 12' vorzusehen. Dabei muss nicht an sämtlichen vorgesehenen Lagerstrukturen 12, 12' auch ein Heizelement vorgesehen sein. Wenn eine Lagerstruktur 12, 12' beheizt werden soll, kann dies durch eine beliebige Anzahl von Heizelementen 14, 14', 14" bewerkstelligt werden. Auch die Gestaltung der Heizelemente 14, 14', 14" ist beliebig kombinierbar. So können bspw. in einer oder mehreren Lagerstrukturen eines Fördersystems 10, 10' spiralförmige Heizelemente 14, 14', 14" eingesetzt werden und in weiteren Lagerstrukturen 12, 12' desselben Fördersystems 10, 10' lineare Heizelemente 14, 14', 14". Genauso ist es möglich, Lagerstrukturen 12, 12' mit integrierten Heizelementen 14, 14', 14" und Lagerstrukturen 12, 12' mit nicht integrierten Heizelementen 14, 14', 14" zu kombinieren und/oder im Inneren der Lagerstrukturen 12, 12' vorgesehene Heizelemente 14, 14', 14" bzw. nach innen hin freiliegende Heizelemente 14, 14', 14" mit auf einer Außenseite einer weiteren Lagerstruktur 12, 12' vorgesehenen Heizelementen 14, 14', 14" bzw. nach außen hin freiliegenden Heizelementen 14, 14', 14" zu kombinieren. Außerdem kann das Vorsehen oder nicht Vorsehen von Schutzelementen 16, 16' an mehreren Lagerstrukturen 12, 12' sowie deren Art bzw. Ort der Befestigung beliebig kombiniert werden. Z. B. kann bei einem Fördersystem 10 mit zwei Außenlagerböcken 12a und einem Mittellagerbock 12b an dem am Mittellagerbock 12b vorgesehen Heizelement kein Schutzelement 16 vorgesehen sein, an einem der Außenlagerböcke 12a ein lösbar befestigten Schutzelement 12a und an dem anderen der Außenlagerböcke 12a ein nicht lösbar befestigtes Schutzelement 16.

## Patentansprüche

1. Baumaschine (1, 1') zur Verarbeitung und/oder zum Transport von Material (9, 9') mit temperaturabhängiger Viskosität, wobei die Baumaschine (1, 1') ein Straßenfertiger (1) oder ein Beschicker (1') ist, umfassend:
einen Maschinenrahmen (2, 2'), an dem ein Gutbunker (3, 3'), ein Fahrerstand (4, 4'), ein Primärantrieb (5, 5') sowie ein Fahrwerk (6, 6') mit Vortriebselementen (7, 7') vorgesehen sind,
mindestens ein Fördersystem (10, 10'), das zur Förderung des Materials konfiguriert ist, wobei das Fördersystem (10, 10') mindestens eine Förderschnecke (11, 11') umfasst und die mindestens eine Förderschnecke (11, 11') durch mindestens eine Lagerstruktur (12, 12') gelagert ist,
**dadurch gekennzeichnet, dass** die Lagerstruktur (12, 12') durch mindestens ein Heizelement (14, 14', 14") beheizbar ist, das in einem innerhalb der Lagerstruktur (12, 12') vorhandenen Hohlraum (18, 18') angeordnet oder an einer Außenseite der Lagerstruktur (12, 12') vorgesehen ist.

2. Baumaschine nach Anspruch 1, **dadurch gekennzeichnet, dass** das Heizelement (14, 14', 14") in die Lagerstruktur (12, 12') integriert ist.

3. Baumaschine nach Anspruch 1oder2, **dadurch gekennzeichnet, dass** ein Schutzelement (16, 16') zum Schutz des an der Außenseite der Lagerstruktur (12, 12') vorgesehenen Heizelements (14, 14', 14") vorgesehen ist.

4. Baumaschine nach Anspruch 3, **dadurch gekennzeichnet, dass** das Schutzelement (16, 16') abnehmbar ist.

5. Baumaschine nach Anspruch 3 oder 4, **dadurch gekennzeichnet, dass** das Schutzelement (16, 16') an der Lagerstruktur (12, 12') befestigt ist.

6. Baumaschine nach einem der vorangehenden Ansprüche, **dadurch gekennzeichnet, dass** die mindestens eine Lagerstruktur (12, 12') ein Mittellagerbock (12b) und/oder ein Außenlagerbock (12a) der Förderschnecke (11, 11') ist.

7. Baumaschine nach einem der vorangehenden Ansprüche, **dadurch gekennzeichnet, dass** mehrere Lagerstrukturen (12, 12') mit jeweils mindestens einem Heizelement (14, 14', 14") vorgesehen sind, wobei mindestens ein Heizelement (14, 14', 14") innerhalb der Lagerstruktur (12, 12'), an der es vorgesehen ist, angeordnet ist und/oder mindestens ein Heizelement (14, 14', 14") an einer Außenseite der Lagerstruktur (12, 12'), an der es vorgesehen ist, angeordnet ist.

8. Baumaschine nach Anspruch 7, **dadurch gekennzeichnet, dass** sämtliche Heizelemente (14, 14', 14") innerhalb der jeweiligen Lagerstrukturen (12, 12') angeordnet sind oder sämtliche Heizelemente (14, 14', 14") an einer Außenseite der jeweiligen Lagerstrukturen (12, 12') angeordnet sind.

9. Baumaschine nach einem der vorangehenden Ansprüche, **dadurch gekennzeichnet, dass** die Heizleistung des Heizelements (14, 14', 14") variabel einstellbar ist.

10. Baumaschine nach einem der vorangehenden Ansprüche **dadurch gekennzeichnet, dass** die Heizleistung des Heizelements (14, 14', 14") automatisiert regelbar ist, wobei die Regelung vorzugsweise auf einem vorgegebenen Temperatursollwert basiert.

11. Baumaschine nach einem der vorangehenden Ansprüche, **dadurch gekennzeichnet, dass** das Heizelement (14, 14', 14") unabhängig von übrigen Aggregaten (5, 5', 6, 6', 10, 10', 17, 17') der Baumaschine (1, 1') betreibbar ist.

12. Baumaschine nach einem der vorangehenden Ansprüche **dadurch gekennzeichnet, dass** das Heizelement (14, 14', 14") mit elektrischer Energie betreibbar ist.

13. Baumaschine nach Anspruch 12, **dadurch gekennzeichnet, dass** das mindestens eine Heizelement (14, 14', 14") ein Widerstandsheizelement, ein induktives Heizelement oder einen Infrarotstrahler umfasst.

14. Baumaschine nach einem der Ansprüche 1-11, **dadurch gekennzeichnet, dass** das mindestens eine Heizelement (14, 14', 14") durch Verbrennung eines Brennstoffes betreibbar ist, wobei der Brennstoff vorzugsweise ein Brennstoff zum Betreiben des Primärantriebs (5, 5') oder ein beliebiger anderer Brennstoff ist, der speziell zum Betrieb des mindestens einen Heizelements (14, 14', 14") vorgesehen ist.

15. Baumaschine nach einem der Ansprüche 1-11, **dadurch gekennzeichnet, dass** das Heizelement (14, 14', 14") ein Heißluftgebläse (14") umfasst, das vorzugsweise mit aufgeheizter Kühlluft eines Kühlsystems (17, 17') des Primärantriebs (5, 5') oder mit Abgasen des Primärantriebs (5, 5') betreibbar ist.

## Claims

1. Construction machine (1, 1') for the processing and/or transport of material (9, 9') having a temperature-dependent viscosity, the construction machine (1, 1') being a road finisher (1) or a feeder (1'), comprising:
a machine frame (2, 2') on which a material bunker (3, 3'), an operator's platform (4, 4'), a primary drive (5, 5') as well as an undercarriage (6, 6') with propulsion elements (7, 7') are provided,
at least one conveyor system (10, 10') which is configured to convey the material, wherein the conveyor system (10, 10') comprises at least one screw conveyor (11, 11'), and the at least one screw conveyor (11, 11') is supported by at least one bearing structure (12, 12'),
**characterized in that** the bearing structure (12, 12') can be heated by at least one heating element (14, 14', 14") which is arranged in a hollow space (18, 18') present inside the bearing structure (12, 12') or provided on an outside of the bearing structure (12, 12').

2. Construction machine according to claim 1, **characterized in that** the heating element (14, 14', 14") is integrated into the bearing structure (12, 12').

3. Construction machine according to claim 1 or 2, **characterized in that** a protective element (16, 16') is provided for protecting the heating element (14, 14', 14") provided on the outside of the bearing structure (12, 12').

4. Construction machine according to claim 3, **characterized in that** the protective element (16, 16') is removable.

5. Construction machine according to claim 3 or 4, **characterized in that** the protective element (16, 16') is fixed to the bearing structure (12, 12').

6. Construction machine according to one of the preceding claims, **characterized in that** the at least one bearing structure (12, 12') is a central bearing pedestal (12b) and/or outer bearing pedestal (12a) of the screw conveyor (11, 11').

7. Construction machine according to one of the preceding claims, **characterized in that** several bearing structures (12, 12') each having at least one heating element (14, 14', 14") are provided, wherein at least one heating element (14, 14', 14") is arranged inside the bearing structure (12, 12') at which it is provided and/or at least one heating element (14, 14', 14") is arranged on an outside of the bearing structure (12, 12') at which it is provided.

8. Construction machine according to claim 7, **characterized in that** all heating elements (14, 14', 14") are arranged inside the respective bearing structures (12, 12'), or all heating elements (14, 14', 14") are arranged on an outside of the respective bearing structures (12, 12').

9. Construction machine according to one of the preceding claims, **characterized in that** the heating capacity of the heating element (14, 14', 14") is variably adjustable.

10. Construction machine according to one of the preceding claims, **characterized in that** the heating capacity of the heating element (14, 14', 14") is automatically controllable, wherein the control is preferably based on a predefined desired temperature value.

11. Construction machine according to one of the preceding claims, **characterized in that** the heating element (14, 14', 14") can be operated independently of other aggregates (5, 5', 6, 6', 10, 10', 17, 17') of the construction machine (1, 1').

12. Construction machine according to one of the preceding claims, **characterized in that** the heating element (14, 14', 14") can be operated using electric energy.

13. Construction machine according to claim 12, **characterized in that** the heating element (14, 14', 14") comprises a resistance heating element (14, 14', 14"), an inductive heating element (14, 14', 14") or an infrared radiator.

14. Construction machine according to one of claims 1 to 11, **characterized in that** the at least one heating element (14, 14', 14") can be operated by the combustion of a fuel, wherein the fuel is preferably a fuel for operating the primary drive (5, 5') or any other fuel provided specifically for operating the at least one heating element (14, 14', 14").

15. Construction machine according to one of claims 1 to 11, **characterized in that** the heating element (14, 14', 14") comprises a hot air blower (14") which can preferably be operated by heated cooling air of a cooling system (17, 17') of the primary drive (5, 5') or exhaust gases of the primary drive (5, 5').

## Revendications

1. Machine ou engin de travaux publics (1, 1'), pour la mise en oeuvre et/ou le transport de matériau (9, 9') avec une viscosité fonction de la température, la machine ou l'engin de travaux publics (1, 1') étant un finisseur de route (1) ou un alimentateur (1') et comprenant
un châssis de machine (2, 2') sur lequel sont prévus une trémie d'enrobé (3, 3'), un poste de conduite (4, 4'), un entraînement primaire (5, 5') ainsi qu'un train de roulement (6, 6') avec des éléments d'avancement (7, 7'),
au moins un système de transport (10, 10'), qui est configuré pour le transport du matériau, le système de transport (10, 10') comprenant au moins une vis sans fin de transport (11, 11'), et le montage de ladite au moins une vis sans fin de transport (11, 11') étant assuré par au moins une structure de palier (12, 12'),
**caractérisé en ce que** la structure de palier (12, 12') peut être chauffée par au moins un élément chauffant (14, 14', 14''), qui est agencé dans une cavité (18, 18') existant à l'intérieur de la structure de palier (12, 12'), ou qui est prévu sur un côté extérieur de la structure de palier (12, 12').

2. Machine ou engin de travaux publics selon la revendication 1, **caractérisé en ce que** l'élément chauffant (14, 14', 14") est intégré à la structure de palier (12, 12').

3. Machine ou engin de travaux publics selon la revendication 1 ou la revendication 2, **caractérisé en ce qu'**il est prévu un élément de protection (16, 16') pour la protection de l'élément chauffant (14, 14', 14") prévu sur le côté extérieur de la structure de palier (12, 12').

4. Machine ou engin de travaux publics selon la revendication 3, **caractérisé en ce que** l'élément de protection (16, 16') est amovible.

5. Machine ou engin de travaux publics selon la revendication 3 ou la revendication 4, **caractérisé en ce que** l'élément de protection (16, 16') est fixé à la structure de palier (12, 12').

6. Machine ou engin de travaux publics selon l'une des revendications précédentes, **caractérisé en ce que** ladite au moins une structure de palier (12, 12') est un bloc de palier central (12b) et/ou un bloc de palier extérieur (12a) de la vis sans fin de transport (11, 11').

7. Machine ou engin de travaux publics selon l'une des revendications précédentes, **caractérisé en ce que** sont prévues plusieurs structures de palier (12, 12') avec chacune au moins un élément chauffant (14, 14', 14"), au moins un élément chauffant (14, 14', 14") étant agencé à l'intérieur de la structure de palier (12, 12') sur laquelle il est prévu, et/ou au moins un élément chauffant (14, 14', 14") étant agencé sur un côté extérieur de la structure de palier (12, 12') sur laquelle il est prévu.

8. Machine ou engin de travaux publics selon la revendication 7, **caractérisé en ce que** tous les éléments chauffants (14, 14', 14") sont agencés à l'intérieur des structures de palier (12, 12') respectives, ou tous les éléments chauffants (14, 14', 14") sont agencés sur un côté extérieur des structures de palier (12, 12') respectives.

9. Machine ou engin de travaux publics selon l'une des revendications précédentes, **caractérisé en ce que** la puissance de chauffe de l'élément chauffant (14, 14', 14") peut être réglée de manière variable.

10. Machine ou engin de travaux publics selon l'une des revendications précédentes, **caractérisé en ce que** la puissance de chauffe de l'élément chauffant (14, 14', 14") est réglable de manière automatisée, la régulation se basant de préférence sur une valeur de consigne de température, prescrite.

11. Machine ou engin de travaux publics selon l'une des revendications précédentes, **caractérisé en ce qu'**il est possible de faire fonctionner l'élément chauffant (14, 14', 14") indépendamment d'autres groupes ou appareillages (5, 5', 6, 6', 10, 10', 17, 17') de la machine ou de l'engin de travaux publics (1, 1').

12. Machine ou engin de travaux publics selon l'une des revendications précédentes, **caractérisé en ce que** l'élément chauffant (14, 14', 14") peut fonctionner à l'énergie électrique.

13. Machine ou engin de travaux publics selon la revendication 12, **caractérisé en ce que** l'élément chauffant (14, 14' , 14") comprend un élément chauffant à résistance, un élément chauffant inductif ou un élément rayonnant à infrarouges.

14. Machine ou engin de travaux publics selon l'une des revendications 1 - 11, **caractérisé en ce que** ledit au moins un élément chauffant (14, 14', 14") peut fonctionner par combustion d'un combustible, le combustible étant de préférence un combustible pour faire fonctionner l'entraînement primaire (5, 5') ou un autre combustible quelconque, qui est prévu pour faire fonctionner ledit au moins un élément chauffant (14, 14', 14").

15. Machine ou engin de travaux publics selon l'une des revendications 1 - 11, **caractérisé en ce que** l'élément chauffant (14, 14', 14") comprend une soufflante à air chaud (14"), qui de préférence fonctionne avec de l'air de refroidissement réchauffé d'un système de refroidissement (17, 17') de l'entraînement primaire (5, 5'), ou avec des gaz d'échappement de l'entraînement primaire (5, 5').
